# EUROPÄISCHE PATENTSCHRIFT

(11) **EP 1 117 233 B1**
(45) Veröffentlichungstag und Bekanntmachung des Hinweises auf die Patenterteilung: **15.09.2004**
(21) Anmeldenummer: 01100676.4
(22) Anmeldetag: 11.01.2001
(51) Int. Cl.: H04M 1/727, H04Q 7/38

(54) **Verfahren zum Anmelden eines Mobilteils an einer Basisstation einer Telekommunikationseinrichtung und Telekommunikationseinrichtung**
Method for registering a mobile part with a base station of a telecommunication installation and a telecommunication installation
Procédé pour registrer un combiné mobile avec une station de base d'une installation de télécommunication et une installation de télécommunication

(30) Priorität: 12.01.2000 DE 10000963
(43) Veröffentlichungstag der Anmeldung: 18.07.2001
(73) Patentinhaber: SIEMENS AKTIENGESELLSCHAFT, 80333 München (DE)
(72) Erfinder: Beckers, Michael, 46395 Bocholt (DE)

(56) Entgegenhaltungen:
- EP-A- 0 178 393
- DE-A- 19 740 934
- US-A- 4 731 813

## Beschreibung

Die Erfindung betrifft ein Verfahren zum Anmelden eines Mobilteils an einer Basisstation einer Telekommunikationseinrichtung gemäß Oberbegriff des Anspruchs 1 sowie eine Telekommunikationseinrichtung gemäß Oberbegriff des Anspruchs 16.

Telekommunikationseinrichtungen, die eine Basisstation und ein Mobilteil umfassen, sollen für den Benutzer ausreichend Sicherheit gegen Missbrauch bieten. Das heißt, es soll verhindert werden, dass ein nicht zur Basisstation gehörendes Mobilteil an der Basisstation angemeldet werden kann, wodurch für Dritte eine unberechtigte Benutzung des Telekommunikationsanschlusses ermöglicht wäre. Um zu verhindern, dass ein unberechtigtes Mobilteil an der Basisstation angemeldet werden kann, ist es erforderlich, ein berechtigtes Mobilteil der Basisstation eindeutig zuzuordnen. Hierzu ist im DECT-Standard eine Anmeldeprozedur vorgegeben, um ein berechtigtes Mobilteil der Basisstation zuzuordnen. Die Anmeldeprozedur wird vom Benutzer durchgeführt. Dabei wird am Mobilteil ein sogenannter Pin-Code eingegeben, der mit einem in der Basisstation hinterlegten Code übereinstimmen muss, damit das berechtigte Mobilteil an der Basisstation angemeldet werden kann. In Dokument DE19740934 A generiert ein Mobilteil, um sich an einer Basisstation zu registrieren, eine Zufallsnummer als Identifikation und überträgt diese Nummer über einen freien Funkkanal an die Basisstation. Nachdem die Basisstation ein mögliche Registrierung eines weiteren Mobilteils überprüft hat, fordert die Basisstation eine Bestätigung von dem Mobilteil über eine lokale Verbindung an. Die Anmeldung des Mobilteils an der Basisstation kann auch bereits während der Fertigung der Telekommunikationseinrichtung durchgeführt werden. Die Telekommunikationseinrichtung wird also im bereits angemeldeten Zustand ausgeliefert. Dies verteuert jedoch die Fertigung, da ein zusätzlicher Verfahrensschritt durchgeführt werden muss.

Es ist daher Aufgabe der Erfindung, ein Mobilteil an einer Basisstation derart gesichert automatisch anzumelden, dass der Anmeldevorgang aus der Sicht des Herstellers solcher Mobilteile und Basisstationen kostengünstig und aus der Sicht der Benutzer solcher Mobilteile und Basisstationen bedienfreundlich ist.

Gelöst wird diese Aufgabe mit einem Verfahren, welches die im Anspruch 1 genannten Merkmale zeigt. Dadurch, dass zwischen der Basisstation und dem Mobilteil ein synchrones oder quasisynchrones Betriebsereignis zur Ermittlung jeweils eines Betriebs-Bezugszeitpunkts der Basisstation und des Mobilteils dient, dass die ermittelten Bezugszeitpunkte miteinander verglichen werden und dass die Basisstation das anzumeldende Mobilteil nur dann akzeptiert, wenn der Unterschied zwischen den Bezugszeitpunkten innerhalb eines vorgebbaren Bereichs liegt, ist es vorteilhaft möglich, das Mobilteil automatisch, das heißt ohne Bedienfeldeingabe für die eigentliche Anmeldeprozedur durch den Nutzer, an der Basisstation anzumelden. Dadurch, dass der gemeinsame Bezugszeitpunkt ermittelt wird, ist das automatische Anmelden außerdem abgesichert, das heißt, dass ein unberechtigtes Mobilteil nicht ohne weiteres an der Basisstation angemeldet werden kann, da dieses Mobilteil keinen gemeinsamen Bezugszeitpunkt mit dieser Basisstation besitzt. Das erfindungsgemäße Verfahren ermöglicht also ein abgesichertes automatisches Anmelden des Mobilteils an der Basisstation, ohne dass der Benutzer die aufwendige Anmeldeprozedur bei der Telekommunikationseinrichtung durchführen muss.

Der gemeinsame Betriebs-Bezugszeitpunkt kann nur zwischen einer Basisstation und einem Mobilteil ermittelt werden, bei denen das Betriebsereignis synchron oder quasisynchron auftritt. Unter einem synchronen Betriebsereignis wird im Zuge dieser Anmeldung ein Ereignis verstanden, welches gleichzeitig sowohl an der Basisstation als auch an dem Mobilteil ein- beziehungsweise auftritt. Ein derartiges synchrones Betriebsereignis kann beispielsweise das Aktivieren einer für Basisstation und Mobilteil gemeinsamen Energieversorgungseinrichtung sein, so dass die für die Basisstation vorgesehene Versorgungsspannung und die für das Mobilteil vorgesehene Ladespannung gleichzeitig an diesen beiden Baugruppen der Telekommunikationseinrichtung anliegen. Es wird hier also gleichzeitig an beiden Baugruppen eine Funktionsänderung eingeleitet. Quasisynchrone Betriebsereignisse sind im Zuge dieser Anmeldung mit geringem Zeitversatz an Basissation und Mobilteil auftretende Ereignisse, die nach dem Ursache-Wirkungs-Prinzip eintreten können. So kann beispielsweise durch die Aktivierung der Stromversorgung an der Basisstation durch Signallaufzeiten die Aktivierung der Basisstation am Mobilteil zeitverzögert erkannt werden. Quasisynchrone Betriebsereignisse können jedoch auch manuell durch Bedienfeldeingaben an der Basisstation ausgelöst werden. Umfaßt die Basisstation ein Bedienfeld, kann über dieses Bedienfeld die Anmeldeprozedur aktiviert werden, wobei die Durchführung der Anmeldeprozedur jedoch automatisch abläuft. Damit ein quasisynchrones Betriebsereignis entsteht, kann am Mobilteil nahezu gleichzeitig durch eine Bedienfeldeingabe der Bezugszeitpunkt an dem Mobilteil festgelegt werden. Ein anderes quasisynchrones Betriebsereignis kann auch ein Zurücksetzen (Reset) der Basisstation sein, bei dem durch das Zurücksetzen die Basisstation in Anmeldebereitschaft gebracht wird und das Zurücksetzen auch vom Mobilteil verzögert, also quasisynchron, erkannt wird. Insgesamt zeigt sich also, dass ein synchrones oder quasisynchrones Betriebsereignis durch viele verschiedenartige Einflußnahmen beziehungsweise Betriebszustandsänderungen ausgelöst sein kann, wobei diese Betriebszustandsänderungen manuell durch Interaktion zwischen Benutzer und Telekommunikationseinrichtung oder automatisch ausgelöst werden können. Diesen synchronen oder quasisynchronen Betriebsereignissen geht also immer eine Betriebszustandsänderung zumindest an der Basisstation voraus.

Um den gemeinsamen Bezugszeitpunkt zwischen Basisstation und Mobilteil zu ermitteln, ist bevorzugt vorgesehen, dass die Basisstation an das Mobilteil ihre Betriebsstart, also das Betriebsereignis, übermittelt. Es kann auch vorgesehen sein, dass vom Mobilteil selbst das Betriebsereignis, vorzugsweise der Betriebsstart der Basisstation, erkannt wird. Beispielsweise kann die Übermittlung des Betriebsstarts an das Mobilteil über eine Infrarot-Schnittstelle erfolgen. Bekanntlich weisen derartige Infrarot-Schnittstellen eine geringe Reichweite auf, so dass damit der Betriebsstart auch nur am berechtigten Mobilteil erkannt wird. Die Infrarot-Schnittstelle arbeitet systembedingt auch nicht, wenn zwischen Infrarot-Sender und Infrarot-Empfänger ein Hindernis vorliegt. Alternativ kann - wie vorstehend erwähnt - vom Mobilteil selbst erkannt werden, dass der Betriebsstart für die Basisstation erfolgt ist. Dies kann beispielsweise dadurch erreicht werden, dass das Mobilteil die Aktivierung der Energieversorgung für die Basisstation erkennt. Anstelle der Aktivierung der Energieversorgung kann das Mobilteil gegebenenfalls auch erkennen, dass die Basisstation eingeschaltet, also mit einer aktiven Energieversorgung verbunden wird. Als Betriebsereignis an der Basisstation und dem Mobilteil wird also in bevorzugter Weise der Betriebsstart der Basisstation herangezogen. Es kann auch vorgesehen sein, dass durch eine Bedienfeldeingabe an der Basisstation die Anmeldeprozedur gestartet wird, die dann automatisch abläuft.

Bei einem bevorzugten Ausführungsbeispiel ist vorgesehen, dass beim Betriebsstart der Basisstation ein erster Zählvorgang gestartet wird und - resultierend aus dem Betriebsstart - im Mobilteil ein zweiter Zählvorgang gestartet wird. Durch die Zählvorgänge kann besonders einfach auf den Betriebsstart rückgeschlossen werden, wenn die Zählerstände verglichen werden. Da beide Zählvorgänge im wesentlichen gleichzeitig gestartet werden, lässt sich der gemeinsame Bezugspunkt, nämlich der Betriebsstartzeitpunkt ermitteln. Mit anderen Worten, der vom ersten Zählvorgang rückgerechnete Betriebsstartzeitpunkt wird mit dem zweiten Zählvorgang rückgerechneten Betriebsstartzeitpunkt verglichen. Fallen beide Betriebs-Bezugszeitpunkte zusammen, ist klar, dass Mobilteil und Basisstation zusammengehören, da beide im wesentlichen auf denselben Betriebsstartzeitpunkt zurückgerechnet haben. Dies ist jedoch nur möglich, wenn der Betriebsstart am Mobilteil erkannt wird.

Besonders bevorzugt wird ein Ausführungsbeispiel, bei dem die Information "Aktivierung der Energieversorgung" über eine trennbare elektrisch leitende Verbindung zwischen Basisstation und/oder der Energieversorgung und dem Mobilteil erfolgt. Insbesondere ist hierbei vorgesehen, dass das Mobilteil in einer Ladeschale liegt, die beispielsweise in der Basisstation integriert sein kann, so dass über die bereits vorhandenen Ladekontakte für das Mobilteil erkannt wird, dass die Energieversorgung für die Basisstation eingeschältet wird. Sind Basisstation und Ladeschale getrennte Elemente, so ist insbesondere vorgesehen, dass Basisstation und Ladeschale eine gemeinsame Energieversorgung besitzen, so dass die Aktivierung der Energieversorgung für die Basisstation gleichzeitig die Ladespannung für das Mobilteil bereitstellt. Die trennbare elektrisch leitende Verbindung dient also insbesondere zur zeitweisen Energieversorgung für das Aufladen des Mobilteils.

Bei einem besonders bevorzugten Ausführungsbeispiel ist vorgesehen, dass beim Übermitteln der Anmeldedaten vom Mobilteil an die Basisstation der am Mobilteil aufgelaufene zweite Zählerstand an die Basisstation übertragen wird. Ferner erfolgt ein Vergleich des ersten und zweiten Zählerstands, wobei das anzumeldende Mobilteil als berechtigtes Mobilteil dann akzeptiert wird, wenn der Zählerstandunterschied geringer als oder gleich wie ein vorgebbarer maximaler Zählerstandunterschied ist. Üblicherweise werden bei DECT-Telefonen beim Anmelden Anmeldungsdaten zwischen Mobilteil und Basisstation ausgetauscht. Um das erfindungsgemäße Verfahren durchzuführen, ist es also lediglich notwendig, den im Mobilteil aufgelaufenen zweiten Zählerstand an die Basisstation zu übermitteln. Diese Information kann einfach an die Anmeldedaten angehängt werden. Ein zusätzlicher Aufwand zur Übermittlung des zweiten Zählerstands muss somit im wesentlichen nicht betrieben werden.

In einer Weiterbildung der Erfindung ist vorgesehen, dass die Anmeldebereitschaft der Basisstation an das Mobilteil über eine unidirektional arbeitende Funkstrecke angezeigt wird. Üblicherweise werden beim Anzeigen der Anmeldebereitschaft von der Basisstation von dem Mobilteil Anmeldedaten abgefragt, die dann in einer Weiterbildung der Erfindung zusammen mit dem zweiten Zählerstand über eine bidirektional arbeitende Funkstrecke an die Basisstation übermittelt werden. Die bidirektional arbeitende Funkstrecke dient im Normalbetrieb der Telekommunikationseinrichtung für die Übermittlung der Daten zwischen Mobilteil und Basisstation, beispielsweise wenn das Mobilteil aktiv ist, insbesondere ein Telefongespräch geführt wird.

Diese Aufgabe wird auch mit einer Telekommunikationseinrichtung gelöst, die die im Anspruch 16 genannten Merkmale besitzt. Die Telekommunikationseinrichtung umfasst eine Basisstation, die an eine Energieversorgungseinrichtung anschließbar ist. Außerdem besitzt die Telekommunikationseinrichtung ein Mobilteil, das an eine Ladeeinrichtung anschließbar ist, sofern das Mobilteil über Akkumulatoren mit elektrischer Energie versorgt wird. Außerdem ist die Telekommunikationseinrichtung dafür ausgelegt, zumindest eine Funkstrecke zum Datenaustausch zwischen Basisstation und Mobilteil bereitzustellen. Erfindungsgemäß weist die Basisstation und das Mobilteil jeweils eine Einrichtung zur Ermittlung eines Betriebs-Bezugszeitpunktes auf, die durch ein synchrones oder quasisynchrones Betriebsereignis zwischen Basisstation und Mobilteil aktiviert werden. Außerdem ist erfindungsgemäß vorgesehen, dass die Basisstation eine Vergleichseinrichtung für die ermittelten Betriebs-Bezugszeitpunkte umfasst. Hat die Vergleichseinrichtung die beiden Bezugs-Betriebszeitpunkte verglichen, wird das anzumeldende Mobilteil von der Basisstation akzeptiert, sofern der ermittelte-Unterschied der Betriebszeitpunkte innerhalb eines vorgebbaren Bereichs liegt. Somit wird auch bei der erfindungsgemäßen Telekommunikationseinrichtung durch den gemeinsamen zeitlichen Bezugspunkt sichergestellt, dass lediglich das Mobilteil an der Basisstation angemeldet werden kann, welches den Betriebsstart der Basisstation erkannt hat. Es ist dadurch sichergestellt, dass beide Bezugszeitpunkte innerhalb des vorgebbaren Bereichs liegen. Somit wird auch mit der erfindungsgemäßen Telekommunikationseinrichtung ein gesicherter Betrieb ermöglicht, bei dem es nahezu ausgeschlossen ist, dass sich ein Dritter mit einem nicht zur Basisstation gehörenden Mobilteil an der Basisstation anmelden kann und somit auch vermieden wird, dass der Telekommunikationsanschluss unberechtigterweise genutzt wird.

Bevorzugt werden die Einrichtungen zur Ermittlung der Bezugszeitpunkte als Zähleinrichtung ausgebildet, die beim Betriebsstart der Basisstation aktiviert, also gestartet werden. Damit lassen sich die Bezugszeitpunkte leicht ermitteln und somit auch der gemeinsame Bezugszeitpunkt, weil die nach dem Betriebsstart auflaufenden Zählerstände ein Rückrechnen auf den Betriebsstartzeitpunkt ermöglichen.

Bei einem besonders bevorzugten Ausführungsbeispiel ist vorgesehen, dass die Ladeeinrichtung für das Mobilteil auch die Energieversorgung für die Basisstation übernimmt. Es ist also eine gemeinsame Energieversorgung vorgesehen, so dass sichergestellt ist, dass der Einschaltimpuls der Energieversorgung für die Basisstation auch am Mobilteil erkannt wird, wenn dies in der Ladeeinrichtung liegt. Besonders vorteilhaft ist es, wenn die Basisstation eine Aufnahmeschale für das Mobilteil umfasst, in der auch die Ladekontakte angeordnet sind, die - bei einliegendem Mobilteil - elektrischen Kontakt mit den Gegenkontakten des Mobilteils herstellen, so dass dieses geladen und auch der Einschaltimpuls der Energieversorgung für die Basisstation erkannt werden kann.

Bevorzugt wird eine Ausführungsform, bei der die Zähleinrichtungen dieselbe Zählgeschwindigkeit besitzen. Damit kann dann der gemeinsame Bezugs-Betriebszeitpunkt leicht ermittelt werden, da eine Umrechnung eines Zählerstands nicht erfolgen muss.

Bevorzugt stellt die Telekommunikationseinrichtung eine uniund bidirektionale Funkstrecke bereit, wobei über die unidirektionale Funkstrecke (Dummy-Bearer) die Anmeldebereitschaft signalisiert wird und über die bidirektionale Funkstrecke (Traffic-Bearer) der Datenaustausch bei einem Telekommunikationsvorgang erfolgt.

Weitere vorteilhafte Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: schematisch eine Telekommunikationseinrichtung mit einer separaten, gemeinsamen Energieversorgung für Basisstation und Mobilteil,
- Figur 2: eine Telekommunikationseinrichtung mit einer eine Energieversorgung aufweisenden Basisstation,
- Figur 3: ein Flussdiagramm eines Ablaufs zur Aufnahme des gesicherten Betriebs der Telekommunikationseinrichtung, und
- Figur 4: ein Flussdiagramm eines zweiten Ausführungsbeispiels einer Aufnahme des gesicherten Betriebs der Telekommunikationseinrichtung.

Es wird davon ausgegangen, dass die im folgenden beschriebene Telekommunikationseinrichtung eine Basisstation ohne Bedienfeld umfasst. Selbstverständlich kann jedoch auch eine Basisstation mit Bedienfeld vorgesehen sein.

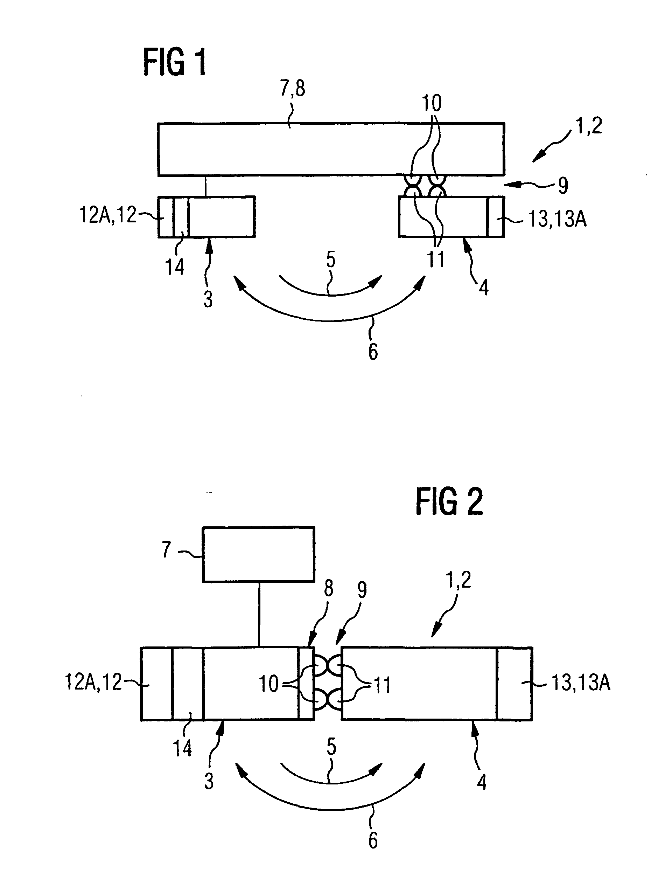

Figur 1 zeigt eine Telekommunikationseinrichtung 1, die insbesondere als Telefon 2 ausgebildet sein kann. Die Telekommunikationseinrichtung 1 umfasst eine Basisstation 3, die ein Endgerät an einem hier nicht dargestellten Telekommunikationsanschluss bildet. Die Telekommunikationseinrichtung 1 umfasst ferner ein Mobilteil 4, insbesondere Telefonteil, das über eine unidirektionale Funkstrecke 5 mit der Basisstation 3 verbindbar ist. Über eine bidirektionale Funkstrecke 6 ist ein Datenaustausch zwischen Basisstation 3 und Mobilteil 4 möglich. Die Telekommunikationseinrichtung 1 ist an eine Energieversorgungseinrichtung 7 anschließbar, die die Basisstation 3 mit Energie versorgt und als Ladestation 8 für das Mobilteil 4 dient. Hierzu ist eine trennbare elektrisch leitende Verbindung 9 zwischen Mobilteil 4 und Energieversorgungseinrichtung 7 vorgesehen, die energieversorgungsseitig Ladekontakte 10 und mobilteilseitig Gegenkontakte 11 besitzt.

Die Basisstation 3 besitzt eine Einrichtung 12A zur Ermittlung eines Betriebs-Bezugszeitpunktes. Ebenso weist das Mobilteil 4 eine Einrichtung 13A zur Ermittlung des Betriebs-Bezugszeitpunktes auf. Die Einrichtungen 12A und 13A sind insbesondere als Zähleinrichtungen 12 und 13 ausgebildet, die vorzugsweise dieselbe Zählgeschwindigkeit aufweisen. Es ist vorgesehen, dass die Einrichtung 12A in der Basisstation 3 beim Betriebsstart der Basisstation 3 aktiviert wird. Dies kann beispielsweise durch Einschalten der Basisstation 3 erfolgen. Selbstverständlich kann die Aktivierung der Einrichtung 12A auch durch das Inbetriebsetzen der Energieversorgungseinrichtung 7 erfolgen. Gegebenenfalls kann an der Basisstation 3 auch ein Bedienelement hierfür vorgesehen sein, um die Einrichtung 12A zu aktivieren. Der Betriebsstart der Basisstation 3 wird auch an der Einrichtung 13A erkannt, die dadurch ebenfalls aktiviert wird. Der Betriebsstart an der Basisstation 3 und das Erkennen des Betriebsstarts der Basisstation 3 am Mobilteil 4 ist durch die Verzögerung durch Signallaufzeiten ein quasisynchrones Betriebsereignis. Alternativ kann die Aktivierung der Einrichtung 13A über eine hier nicht dargestellte Infrarot-Schnittstelle erfolgen, die zwischen der Basisstation 3 und dem Mobilteil 4 aufgebaut werden kann.

Die erste Zähleinrichtung 12 in der Basisstation 3 ist dadurch aktivierbar, dass die Basisstation 3 in Betrieb genommen beziehungsweise die Energieversorgungseinrichtung 7 aktiviert wird. Die Zähleinrichtung 12 kann also beispielsweise nach Ausschalten der Basisstation 3 und durch deren Wiedereinschalten aktiviert werden oder wenn die Energieversorgungseinrichtung 7 aus- und wieder eingeschaltet wird. Das Mobilteil 4 weist die zweite Zähleinrichtung 13 auf, die dadurch aktiviert wird, dass der Betriebsstart der Basisstation beziehungsweise das ans-Netz-gehen der Energieversorgungseinrichtung 7 erkannt wird. Dies ist insbesondere dadurch möglich, dass an den Ladekontakten 10 eine elektrische Spannung ansteht. Die Basisstation 3 umfasst eine Vergleichseinrichtung 14, die dafür vorgesehen ist, um die Zählerstände der Zähleinrichtungen 12 und 13 zu vergleichen.

In Figur 2 ist ein zweites Ausführungsbeispiel einer Telekommunikationseinrichtung 1 wiedergegeben, die vorzugsweise ebenfalls als Telefon 2 ausgebildet ist. Gleiche beziehungsweise gleichwirkende Teile wie in Figur 1 sind in Figur 2 mit den selben Bezugszeichen versehen. Insofern wird auf deren Beschreibung verwiesen.

Im Unterschied zur Telekommunikationseinrichtung 1 nach Figur 1 ist die Telekommunikationseinrichtung 1 nach Figur 2 mit einer Basisstation 3 ausgestattet, die die Ladestation 8 umfasst. Die Energieversorgung des Mobilteils 4 erfolgt somit von der Energieversorgungseinrichtung 7 über die Basisstation 3. Die Ladestation 8 ist also in der Basisstation 3 integriert und insbesondere als sogenannte Ladeschale ausgebildet, in die das Mobilteil 4 für einen Aufladevorgang des elektrischen Speichers des Mobilteils 4 eingelegt wird.

Die Energieversorgungseinrichtung 7 kann für die Telekommunikationseinrichtung 1 nach Figur 1 und 2 vorzugsweise als sogenanntes Steckernetzteil ausgebildet sein. Beim Ausführungsbeispiel nach Figur 1 ist dann vorzugsweise vorgesehen, dass eine separate Ladeschale für das Mobilteil 4 vorhanden ist, die eine elektrisch leitende Verbindung mit der Energieversorgungseinrichtung 7 aufweist und die Ladekontakte 10 aufnimmt.

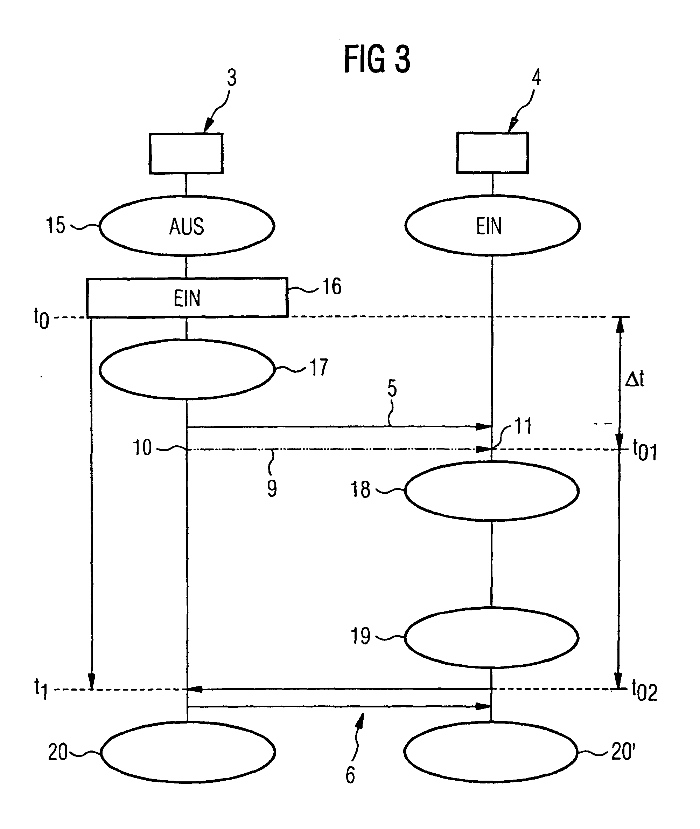

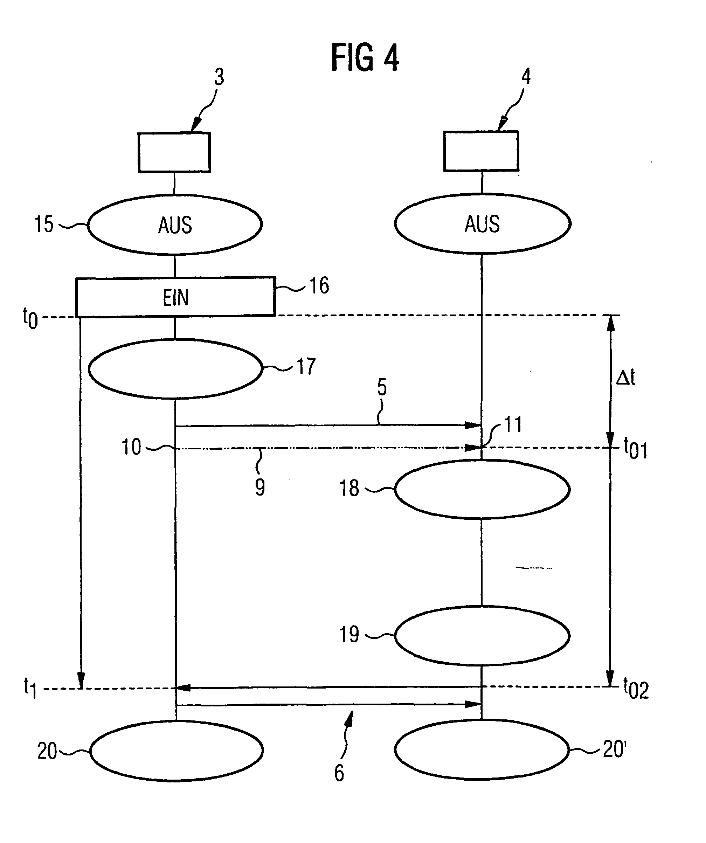

Anhand der Figuren 3 und 4 wird im folgenden ein Verfahren zum abgesicherten automatischen Anmelden des Mobilteils 4 an der Basisstation 3 beschrieben. Gleiche beziehungsweise gleichwirkende Teile wie im Zusammenhang mit den Figuren 1 und 2 beschrieben, sind in den Figuren 3 und 4 mit den selben Bezugszeichen versehen. Auf eine nochmalige Beschreibung wird daher verzichtet.

Im folgenden wird davon ausgegangen, dass die Basisstation 3 ausgeschaltet beziehungsweise die Energieversorgung 7 deaktiviert ist. Dieser Zustand ist im Flussdiagramm nach Figur 3 mit den Bezugszeichen 15 versehen. Durch Aktivierung der Energieversorgungseinrichtung 7 beziehungsweise durch Einschalten der Basisstation 3 in einem Schritt 16, der die Aktivierung der Energieversorgung 7 und eine Betriebszustandsänderung der Basisstation 3 darstellt, wird die erste Zähleinrichtung 12 zu einem Zeitpunkt t₀ gestartet. In einem weiteren Schritt 17 signalisiert die Basisstation 3 über die unidirektionale Funkstrecke 5 dem in der Ladestation 8 liegenden und eingeschalteten Mobilteil 4 ihre Anmeldebereitschaft. Dadurch, dass das Mobilteil 4 in der Ladestation 8 liegt beziehungsweise die Gegenkontakte 11 mit den Ladekontakten 10 die elektrisch leitende Verbindung 9 bilden, erhält das Mobilteil 4 den Einschaltimpuls beziehungsweise die Information "Aktivierung der Energieversorgung" für die Basisstation 3. Dies kann beispielsweise dadurch erfolgen, dass - beim Ausführungsbeispiel nach Figur 1 - die Energieversorgungseinrichtung 7 eingeschaltet wird, so dass an den Ladekontakten 10 die Ladespannung anliegt. Ist hingegen die Energieversorgungseinrichtung 7 eingeschaltet und lediglich die Basisstation 3 ausgeschaltet, bewirkt ein Einschalten der Basisstation 3 eine kurzzeitige Erniedrigung der Ladespannung an den Ladekontakten 10, da die Basisstation 3 als Verbraucher auf die Energieversorgungseinrichtung 7 aufgeschaltet wird. Vom Mobilteil 4 kann also die Aktivierung der Basisstation entweder durch Vorhandensein der Ladespannung oder durch eine kurzzeitige Spannungserniedrigung der Ladespannung erkannt werden. Durch den Betriebsstart der Basisstation 3 wird die zweite Zähleinrichtung 13 im Mobilteil 4 zu einem Zeitpunkt t₀₁ gestartet. Anschließend sucht das Mobilteil 4 in einem Verfahrensschritt 18 eine anmeldebereite Basisstation 3. Ermittelt in einem Verfahrensschritt 19 das Mobilteil 4, dass es synchron zur anmeldebereiten Basisstation 3 ist, werden über die bidirektionale Funkstrecke 6 Anmeldedaten vom Mobilteil 4 an die Basisstation 3 übermittelt. Gleichzeitig wird der seit dem Zeitpunkt t₀₁ aufgelaufene Zählerstand der Zähleinrichtung 13 zum Zeitpunkt t₀₂ zusammen mit den Anmeldedaten über die Funkstrecke 6 an die Basisstation 3 übermittelt. Bei Erhalt dieser Daten wird der Zählerstand der Zähleinrichtung 12 zum Zeitpunkt t₁ ermittelt. Die aufgelaufenen Zählerstände werden dann in der Vergleichseinrichtung 14 verglichen. Da die beiden Zähleinrichtungen 12 und 13 vorzugsweise mit derselben Zählgeschwindigkeit arbeiten, kann von der Vergleichseinrichtung 14 der Zählerstandunterschied Δt ermittelt werden, der im wesentlichen aus Signallaufzeiten resultiert. Er kann entsprechend klein gewählt werden. Ist der ermittelte Zählerstandunterschied Δt innerhalb des vorgebbaren Werts beziehungsweise Bereichs, nimmt die Basisstation 3 an, dass das anzumeldende Mobilteil 4 das Mobilteil ist, das auch den Einschaltimpuls erhalten hat. Die Basisstation 3 geht deshalb davon aus, dass dieses Mobilteil ihr zuzuordnen ist, also Basisstation 3 und Mobilteil 4 ein Paar bilden. Ist der Zählerstandunterschied Δt also innerhalb des vorgebbaren Bereichs, wird in einem Verfahrensschritt 20 die Anmeldung des Mobilteils 4 akzeptiert und auf Normalbetrieb der Basisstation 3 umgeschaltet. Im DECT-Standard ist vorgesehen, dass die Basisstation 3 über die bidirektionale Funkstrecke 6 dem Mobilteil 4 mitteilt, dass es als anmeldeberechtigt akzeptiert wurde, so dass es in einem Verfahrensschritt 20' ebenfalls in den Normalbetrieb eintritt, der eine Telekommunikation ermöglicht.

Beim Ausführungsbeispiel des Verfahrens zum abgesicherten automatischen Anmelden wird im Flussdiagramm in Figur 4 davon ausgegangen, dass das Mobilteil 4 ausgeschaltet in seiner Ladestation liegt. Der wesentliche Unterschied zum Verfahrensablauf nach Figur 3 besteht nunmehr darin, dass über die Verbindung 9, also über die Ladekontakte 10 und Gegenkontakte 11 das Mobilteil 4 eingeschaltet wird, wodurch sich der Betriebszustand des Mobilteils ändert. Die übrigen Verfahrensschritte sind identisch mit denen, die in Zusammenhang mit Figur 3 beschrieben sind. Gleiche beziehungsweise gleichwirkende Teile sind daher in Figur 4 mit denselben Bezugszeichen versehen wie in den übrigen Figuren 1 bis 3.

Aus den Figuren 3 und 4 geht hervor, dass die Basisstation 3 die Anmeldebereitschaft bis zum Zeitpunkt t1 beziehungsweise bis zum Zählerstand bei t₁ - ausgehend von t₀ - aufrechterhält. Es ist klar, dass der Zeitpunkt t1 kein fester Wert beziehungsweise Zeitpunkt ist, sondern davon abhängt, wann das Mobilteil 4 die Anmeldedaten und den zweiten Zählerstand übermittelt. Selbstverständlich kann für den Zeitraum t₁ - t₀ ein Maximalwert festgelegt werden, also die Anmeldebereitschaft nach Überschreiten eines Zeitraums aufgehoben werden, da möglicherweise kein anmeldebereites Mobilteil vorliegt.

## Patentansprüche

1. Verfahren zum Anmelden eines Mobilteils an einer Basisstation einer Telekommunikationseinrichtung, bei dem Anmeldebereitschaft der Basisstation (3) hergestellt wird, **dadurch gekennzeichnet, dass** zwischen der Basisstation (3) und dem Mobilteil (4) ein synchrones oder quasisynchrones Betriebsereignis zur Ermittlung jeweils eines Betriebs-Bezugszeitpunkts der Basisstation und des Mobilteils (4) dient, dass die ermittelten Betriebs-Bezugszeitpunkte miteinander verglichen werden und dass die Basisstation (3) das anzumeldende Mobilteil (4) akzeptiert, wenn der Unterschied (Δt) der Betriebs-Bezugszeitpunkte innerhalb eines vergebbaren Bereichs liegt.

2. Verfahren nach Anspruch 1, **dadurch gekennzeichnet, dass** das Betriebsereignis ein Betriebsstart der Basisstation (3) ist.

3. Verfahren nach Anspruch 1, **dadurch gekennzeichne t,** dass das Betriebsereignis eine Bedienfeldeingabe an der Basisstation (3) ist.

4. Verfahren nach Anspruch 1, **dadurch gekennzeichnet, dass** das Betriebsereignis eine Bedienfeldeingabe an der Basisstation (3) und am Mobilteil (4) ist.

5. Verfahren nach einem der vorhergehenden Ansprüche, **dadurch gekennzeichnet, dass** das Betriebsereignis an der Basisstation (3) an das Mobilteil (4) von der Basisstation (3) übermittelt oder vom Mobilteil (4) selbst erkannt wird.

6. Verfahren nach einem der vorhergehenden Ansprüche, **dadurch gekennzeichnet , dass** das Betriebsereignis an der Basisstation (3) vom Mobilteil (4) durch Aktivieren der Energieversorgung der Basisstation (3) erkannt wird.

7. Verfahren nach einem der vorhergehenden Ansprüche, **dadurch gekennzeichnet, dass** das Betriebsereignis an der Basisstation (3) über eine Infrarotstrecke oder dergleichen an das Mobilteil (4) übermittelt wird.

8. Verfahren nach einem der vorhergehenden Ansprüche, **dadurch gekennzeichnet, dass** durch das Betriebsereignis an der Basisstation (3) in der Basisstation (3) ein erster Zählvorgang gestartet wird und - resultierend aus diesem Betriebsereignis - im Mobilteil (4) ein zweiter Zählvorgang gestartet wird.

9. Verfahren nach Anspruch 6, **dadurch gekenn-zeichnet, dass** die Information "Aktivierung der Energieversorgung" über eine trennbare elektrisch leitende Verbindung (9) zwischen Basisstation (3) und/oder Energieversorgung und Mobilteil (4) erfolgt.

10. Verfahren nach Anspruch 8, **dadurch gekenn-zeichnet, dass** die Aktivierung der Energieversorgung für die Basisstation (3) den zweiten Zählvorgang im Mobilteil (4) initiiert.

11. Verfahren nach einem der vorhergehenden Ansprüche, **dadurch gekennzeichnet, dass** die trennbare elektrisch leitende Verbindung (9) zur zeitweisen Energieversorgung des Mobilteils (4) dient.

12. Verfahren nach einem der vorhergehenden Ansprüche, **dadurch gekennzeichnet, dass** beim Übermitteln der Anmeldedaten vom Mobilteil (4) an die Basisstation (3) der am Mobilteil (4) aufgelaufene zweite Zählerstand an die Basisstation (3) übertragen wird, dass in der Basisstation (3) ein Vergleich des ersten und zweiten Zählerstandes erfolgt und dass das anzumeldende Mobilteil (4) als berechtigtes Mobilteil (4) akzeptiert wird, wenn der Zählerstandunterschied (Δt) geringer als oder gleich wie ein vorgebbarer maximaler Zählerstandunterschied ist.

13. Verfahren nach Anspruch 1, **dadurch gekenn-zeichnet, dass** die Anmeldebereitschaft der Basisstation (3) an das Mobilteil (4) über eine unidirektional arbeitende Funkstrecke (5) angezeigt wird.

14. Verfahren nach Anspruch 12, **dadurch gekenn-zeichnet, dass** die Übermittlung der Anmeldedaten und des zweiten Zählerstandes über eine bidirektional arbeitende Funkstrecke (6) erfolgt.

15. Verfahren nach Anspruch 8, **dadurch gekenn-zeichnet, dass** beide Zählvorgänge im wesentlichen mit derselben Zählgeschwindigkeit ablaufen.

16. Telekommunikationseinrichtung mit einer Basisstation, die an eine Energieversorgungseinrichtung anschließbar ist, einem Mobilteil, das an eine Ladeeinrichtung anschließbar ist und mit zumindest einer Funkstrecke zum Datenaustausch zwischen Basisstation und Mobilteil, insbesondere zur Durchführung eines Verfahrens nach zumindest einem der Ansprüche 1 bis 15, **dadurch gekenn-zeichnet, dass** die Basisstation (3) und das Mobilteil (4) jeweils eine Einrichtung zur Ermittlung (12A;13A) eines Betriebs-Bezugszeitpunktes aufweisen, die durch ein synchrones oder quasisynchrones Betriebsereignis zwischen Basisstation (3) und Mobilteil aktiviert werden, dass die Basisstation (3) eine Vergleichseinrichtung (14) für die ermittelten Betriebs-Bezugszeitpunkte umfasst und dass die Basisstation (3) das anzumeldende Mobilteil (4) akzeptiert, wenn der Unterschied (Δt) der Betriebs-Bezugszeitpunkte innerhalb eines vorgebbaren Bereichs liegt.

17. Telekommunikationseinrichtung nach Anspruch 16, **dadurch gekennzeichnet, dass** die Einrichtungen (12A;13A) zur Ermittlung der Betriebs-Bezugszeitpunkte als Zähleinrichtungen (12,13) ausgebildet sind.

18. Telekommunikationseinrichtung nach Anspruch 16, **da-durch gekennzeichnet, dass** die Ladeeinrichtung (8) für das Mobilteil (4) die Energieversorgungseinrichtung (7) für die Basisstation (3) bildet.

19. Telekommunikationseinrichtung nach Anspruch 16 oder 18, **dadurch gekennzeichnet, dass** die Basisstation (3) oder die Ladeeinrichtung (8) Ladekontakte (10) und das Mobilteil (4) Gegenkontakte (11) besitzt.

20. Telekommunikationseinrichtung nach einem der Ansprüche 16 bis 19, **dadurch gekennzeichnet, dass** über die Ladekontakte (10) und Gegenkontakte (11) der Betriebsstart der Energieversorgung für die Basisstation (3) vom Mobilteil (4) erkannt und dadurch die zweite Zähleinrichtung (13) im Mobilteil (4) gestartet wird.

21. Telekommunikationseinrichtung nach einem der Ansprüche 16 bis 20, **dadurch gekennzeichnet, dass** die Zähleinrichtungen (12,13) dieselbe Zählgeschwindigkeiten besitzen.

22. Telekommunikationseinrichtung nach einem der Ansprüche 16 bis 21, **dadurch gekennzeichnet, dass** die Funkstrecke durch eine uni- und eine bidirektionale Funkstrecke (5,6) realisiert ist.

## Claims

1. Method for registration of a mobile unit at a base station of a telecommunications device, in which the ready-for-registration state of the base station (3) is established, **characterized in that** between the base station (3) and the mobile unit (4) a synchronous or quasi-synchronous operating event serves to determine an operating reference point of the base station and of the mobile unit (4), that the operating reference points determined are compared with one another and that the base station (3) accepts the mobile unit (4) to be registered if the difference (Δt) between and the operating reference points lies within a specifiable range.

2. Method in accordance with Claim 1, **characterized in that** the operating event is a start of operation of the base station (3).

3. Method in accordance with Claim 1, **characterized in that** the operating event is a control panel entry at the base station (3).

4. Method in accordance with Claim 1, **characterized in that** the operating event is a control panel entry at the base station (3) and at the mobile unit (4).

5. Method in accordance with one of the previous claims, **characterized in that** the operating event at the base station (3) is transferred to the mobile unit (4) from the base station (3) or is detected by the mobile unit (4) itself.

6. Method in accordance with one of the previous claims, **characterized in that** the operating event at the base station (3) is detected by the mobile unit (4) through activation of the power supply of the base station (3).

7. Method in accordance with one of the previous claims, **characterized in that** the operating event at the base station (3) is transferred via an infrared link or similar to the mobile unit (4).

8. Method in accordance with one of the previous claims, **characterized in that** through the operating event at the base station (3) a first count process is started in the base station (3) and - as a result of this operating event - a second count process is started in the mobile unit (4).

9. Method in accordance with Claim 6, **characterized in that** the information "activating the power supply" is provided via a disconnectable electrically conducting connection (9) between base station (3) and/or power supply and mobile unit (4).

10. Method in accordance with Claim 8, **characterized in that** the activation of the power supply for the base station (3) initiates the second count process in the mobile unit (4).

11. Method in accordance with one of the previous claims, **characterized in that** the disconnectable electrically conductive connection (9) is used for supplying power to the mobile unit (4) from time to time.

12. Method in accordance with one of the previous claims, **characterized in that** on transfer of the registration data from the mobile unit (4) to the base station (3) the second count accumulated at the mobile unit (4) is transmitted to the base station (3), that in the base station (3) the first and second counts are compared and that the mobile unit to be registered (4) is accepted as an authorized mobile unit (4) if the difference between the counts (Δt) is less than or equal to a specifiable maximum difference.

13. Method in accordance with Claim 1, **characterized in that** the ready-for registration state of the base station (3) is indicated to the mobile unit (4) via a unidirectional radio link (5).

14. Method in accordance with Claim 12, **characterized in that** the registration data and of the second count are transferred via a bidirectional radio link (6).

15. Method in accordance with Claim 8, **characterized in that** both count processes essentially operate at the same speed.

16. Telecommunications device with a base station which can be connected to a power supply unit, a mobile unit which can be connected to a charger unit and with at least one radio link for exchange of data between base station and mobile unit especially for execution of a method in accordance with at least one of the Claims 1 to 15, **characterized in that** the base station (3) and the mobile unit (4) each feature a device for transfer (12A;13A) of an operating reference point which is activated by a synchronous or quasi-synchronous operating event between base station (3) and mobile unit, that the base station (3) includes a comparison unit (14) for the operating reference points determined and that the base station (3) accepts the mobile unit (4) to be registered if the difference (Δt) between the operating reference points lies within a specifiable range.

17. Telecommunications device in accordance with Claim 16, **characterized in that** the devices (12A;13A) for determining the operating points are embodied as counters (12,13).

18. Telecommunications device in accordance with Claim 16, **characterized in that** the charger unit (8) for the mobile unit (4) forms the power supply unit (7) for the base station (3).

19. Telecommunications device in accordance with Claim 16 or 18, **characterized in that** the base station (3) or the charger unit (8) has charge contacts (10) and the mobile unit (4) has mating contacts (11).

20. Telecommunications device in accordance with one of the Claims 16 to 19, **characterized in that** the start of operation of the power supply for the base station (4) is detected by the mobile unit (4) via the charge contacts (10) and mating contacts (11) and thereby the second counter (13) is started in the mobile unit (4).

21. Telecommunications device in accordance with one of the Claims 16 to 20, **characterized in that** the counters (12,13) have the same count speeds

22. Telecommunications device in accordance with one of the Claims 16 to 21, **characterized in that** the radio link is implemented by a unidirectional and a bidirectional radio link (6).

## Revendications

1. Procédé pour déclarer un combiné mobile sur une station de base d'une installation de télécommunication, dans lequel on crée une disponibilité de déclaration de la station de base (3), **caractérisé en ce qu'**un événement de fonctionnement synchrone ou quasi synchrone entre la station de base (3) et le combiné mobile (4) sert à déterminer à chaque fois un instant de référence de fonctionnement de la station de base et du combiné mobile (4), **en ce que** les instants de référence de fonctionnement déterminés sont comparés les uns aux autres et **en ce que** la station de base (3) accepte le combiné mobile (4) à déclarer si la différence (Δt) des instants de référence de fonctionnement se situe à l'intérieur d'une plage allouable.

2. Procédé selon la revendication 1, **caractérisé en ce que** l'événement de fonctionnement est une mise en fonctionnement de la station de base (3).

3. Procédé selon la revendication 1, **caractérisé en ce que** l'événement de fonctionnement est une entrée sur le panneau de commande de la station de base (3).

4. Procédé selon la revendication 1, **caractérisé en ce que** l'événement de fonctionnement est une entrée sur le panneau de commande de la station de base (3) et du combiné mobile (4).

5. Procédé selon l'une des revendications précédentes, **caractérisé en ce que** l'événement de fonctionnement sur la station de base (3) est transmis au combiné mobile (4) par la station de base (3) ou est reconnu par le combiné mobile (4) lui-même.

6. Procédé selon l'une des revendications précédentes, **caractérisé en ce que** l'événement de fonctionnement sur la station de base (3) est reconnu par le combiné mobile (4) grâce à l'activation de l'alimentation en énergie de la station de base (3).

7. Procédé selon l'une des revendications précédentes, **caractérisé en ce que** l'événement de fonctionnement sur la station de base (3) est transmis au combiné mobile (4) via une voie infrarouge ou équivalent.

8. Procédé selon l'une des revendications précédentes, **caractérisé en ce que** suite à l'événement de fonctionnement sur la station de base (3), une première opération de comptage est lancée dans la station de base (3) et **en ce que** - comme résultat de cet événement de fonctionnement - une deuxième opération de comptage est lancée dans le combiné mobile (4).

9. Procédé selon la revendication 6, **caractérisé en ce que** l'information "activation de l'alimentation en énergie" s'effectue par une liaison électroconductrice séparable (9) entre station de base (3) et/ou alimentation en énergie et combiné mobile (4).

10. Procédé selon la revendication 8, **caractérisé en ce que** l'activation de l'alimentation en énergie pour la station de base (3) initie la deuxième opération de comptage dans le combiné mobile (4).

11. Procédé selon l'une des revendications précédentes, **caractérisé en ce que** la liaison électroconductrice séparable (9) sert à l'alimentation en énergie temporaire du combiné mobile (4).

12. Procédé selon l'une des revendications précédentes, **caractérisé en ce qu'**en transférant les données de déclaration du combiné mobile (4) à la station de base (3), le deuxième état du compteur cumulé au niveau du combiné mobile (4) est transmis à la station de base (3), **en ce qu'**une comparaison du premier et du deuxième état du compteur a lieu dans la station de base (3) et **en ce que** le combiné mobile (4) à déclarer est accepté comme combiné mobile (4) autorisé si la différence (Δt) des états du compteur est inférieure ou égale à une différence maximale et prédéterminable des états du compteur.

13. Procédé selon la revendication 1, **caractérisé en ce que** la disponibilité de déclaration de la station de base (3) est signalée au combiné mobile (4) par une voie radio à fonctionnement unidirectionnel (5).

14. Procédé selon la revendication 12, **caractérisé en ce que** le transfert des données de déclaration et du deuxième état du compteur s'effectue par une voie radio à fonctionnement bidirectionnel (6).

15. Procédé selon la revendication 8, **caractérisé en ce que** les deux opérations de comptage se déroulent essentiellement à la même vitesse de comptage.

16. Installation de télécommunication comprenant une station de base pouvant être connectée à un dispositif d'alimentation en énergie, un combiné mobile pouvant être connecté à un dispositif de charge et au moins une voie radio destinée à l'échange de données entre station de base et combiné mobile, en particulier pour la mise en oeuvre d'un procédé selon l'une au moins des revendications 1 à 15, **caractérisée en ce que** la station de base (3) et le combiné mobile (4) comprennent chacun un dispositif (12A;13A) permettant la détermination d'un instant de référence de fonctionnement, lesquels dispositifs sont activés par un événement de fonctionnement synchrone ou quasi synchrone entre station de base (3) et combiné mobile, **en ce que** la station de base (3) comprend un dispositif de comparaison (14) pour les instants de référence de fonctionnement déterminés et **en ce que** la station de base (3) accepte le combiné mobile (4) à déclarer si la différence (Δt) des instants de référence de fonctionnement se situe à l'intérieur d'une plage prédéterminable.

17. Installation de télécommunication selon la revendication 16, **caractérisée en ce que** les dispositifs (12A;13A) permettant la détermination des instants de référence de fonctionnement sont réalisés sous forme de dispositifs de comptage (12, 13).

18. Installation de télécommunication selon la revendication 16, **caractérisée en ce que** le dispositif de charge (8) pour le combiné mobile (4) constitue le dispositif d'alimentation en énergie (7) pour la station de base (3).

19. Installation de télécommunication selon la revendication 16 ou 18, **caractérisée en ce que** la station de base (3) ou le dispositif de charge (8) possède des contacts de charge (10) et le combiné mobile (4) des contre-contacts (11).

20. Installation de télécommunication selon l'une des revendications 16 à 19, **caractérisée en ce qu'**à travers lesdits contacts de charge (10) et lesdits contre-contacts (11) la mise en fonctionnement de l'alimentation en énergie de la station de base (3) est reconnue par le combiné mobile (4), ce qui fait démarrer le deuxième dispositif de comptage (13) dans le combiné mobile (4).

21. Installation de télécommunication selon l'une des revendications 16 à 20, **caractérisée en ce que** les dispositifs de comptage (12, 13) possèdent la même vitesse de comptage.

22. Installation de télécommunication selon l'une des revendications 16 à 21, **caractérisée en ce que** la voie radio est réalisée par une voie radio unidirectionnelle et une voie radio bidirectionnelle (5, 6).
